# EUROPEAN PATENT SPECIFICATION

(11) **EP 2 559 121 B1**
(45) Date of publication and mention of the grant of the patent: **01.04.2015**
(21) Application number: 11716398.0
(22) Date of filing: 18.04.2011
(51) Int. Cl.: H02B 1/36

(54) **Sheet metal blank forming a drawer of an electrical cabinet**
Zuschnitt zum Bilden einer Schublade eines Elektroschaltschranks
Ébauche pour la formation d'un tiroir dans une armoire électrique

(30) Priority: 16.04.2010 EP 10160199
(43) Date of publication of application: 20.02.2013
(73) Proprietor: Eaton Industries (Netherlands) B.V., 7559 SC Hengelo (NL)
(72) Inventor: EVERINK, Jacobus, NL-7623 CN Borne (NL)
(74) Representative: Eaton IP Group EMEA
(86) International application number: PCT/EP2011/056098
(87) International publication number: WO 2011/128456

(56) References cited:
- US-A1- 2002 084 734

## Description

### Field of the invention

The present invention relates to a blank for forming a drawer for an electrical cabinet.

### Prior art

European patent publication EP-A-1 570 556 discloses a withdrawable unit for switchgear. The withdrawable unit comprises a sub-installation having a base plate, two side walls at right angles to the surface of the base plate and one sub-section to which electrical components can be fixed.

Publication US2002084734 discloses a drawer having a base plate, two side walls with coupling sections.

### Summary of the invention

The present invention seeks to provide a more cost-effective and easier manner of providing a drawer for an electrical cabinet.

According to the present invention, a blank according to the preamble defined above is provided, in which the blank comprising a base plate part, a first foldable part for a connector wall with an associated folding line extending in a first direction, and second and third foldable parts for side walls with associated folding lines extending in a second direction perpendicular to the first direction, wherein the base plate part comprises lateral slider parts extending outward of the associated folding lines of the second and third foldable parts.

Such a flat blank allows providing a fully functional drawer after bending the relevant parts (by hand). The volume required for transport of drawer material is reduced, and during production, bending processes are eliminated.

In an embodiment, the lateral slider part comprises beveled (e.g. rounded) edges, which allows for easy assembly, and for ease of shifting the drawer into or out of the cabinet holder.

In a further embodiment, the second foldable part has a dimension in the second direction which is larger than a dimension in the second direction of the third foldable part. As the second and third foldable parts form side walls of the drawer, in this manner an aperture is provided in the back side of the drawer, e.g. allowing cabling or connectors to run towards a further space in the electrical cabinet.

In an even further embodiment, the lateral slider parts have substantially similar dimensions, e.g. more than 50%, or even more than 75% of the depth of the drawer (i.e. the dimension of the base plate part in the shifting direction (second direction) of the drawer. This provides for an improved stable installation of the drawer in the cabinet holder.

The blank comprises a slot and a foldable lip in a further embodiment, each attached to different parts of the blank, the position of the slot matching the position of the foldable lip when the different parts of the blank have been folded at an angle to the base plate part. The slot can be provided on the second foldable part and the foldable lip on the first foldable part, or vice versa. This allows providing a strong fixture for the drawer parts, especially of the back wall (first foldable part). Again, the foldable lip may have beveled (e.g. rounded) edges, to ease folding of the various parts.

The blank comprises a fourth foldable part with an associated folding line extending in the second direction and forming a junction with the associated folding line of the first foldable part, in other words, the fourth foldable part touches the first foldable part at the intersection of the associated folding lines.. When folded together, this may further increase stability of the back wall of the drawer.

In a further embodiment, the first foldable part is provided with a plurality of apertures (e.g. four) which are arranged to receive connector arrangements. This allows contacting corresponding bus bars or connectors in the cabinet holder or electrical cabinet. To further improve the stability and rigidness of the back wall of the drawer with the apertures, the blank further comprises a fifth foldable part attached to the first foldable part with an associated folding line extending in the second direction. The fifth foldable part is narrow enough to leave the plurality of apertures free when folded over 180°, yet provides increased stability to the back wall.

The second and third foldable parts are provided with a sixth and a seventh foldable part in a further embodiment having associated folding lines extending in the first direction, which when folded substantially perpendicular to the second and third foldable parts form mounting elements for mounting a drawer front panel without using screws (e.g. by an arresting or clamping arrangement).

The blank according to the various embodiments comprises a plurality of folding lines, which may be formed by punching the blank, which is a very cost-effective production technique. The blank may comprise sheet metal which allows bending the various parts by hand, and still provides a sufficiently structural integral drawer. E.g. sheet metal is used with a thickness of 1-2 mm, e.g. 1.5 mm thick steel.

In a further embodiment, the second and third foldable parts are provided with slots for installing a component rail after forming the drawer. E.g. by using slots on one side and clamping openings on the other side, a component rail can be very easily secured in the drawer.

### Short description of drawings

The present invention will be discussed in more detail below, using a number of exemplary embodiments, with reference to the attached drawings, in which
Fig. 1 shows a top view of a blank for forming a drawer according to an embodiment of the present invention;
Fig. 2a and 2b show perspective views of a part of the drawer of Fig. 1 during the assembly process of the drawer; and
Fig. 3 shows a perspective view of a embodiment of the present drawer in a cabinet holder.

### Detailed description of exemplary embodiments

In modem day electrical cabinets, which are e.g. used for motor control centers (MCC) in industrial environments, the components and wiring between components is positioned in drawers 10, which can slidably connect to bus bars in an electrical cabinet (usually four bus bars for three phases plus ground). The drawers 10 have a width and depth matching holders in electrical cabinets, and a standardized height. In known embodiments, the drawers are provided as semi finished product, which requires a lot of space to get the drawers at the assembly site.

In embodiments of the present invention, the drawers are shipped and delivered as flat steel plate blanks, which can be folded into an operational drawer 10 in situ. The drawer 10 can be folded by hand from the blanks and is then fully functional. This reduces volume for transport and removes the bending process in production.

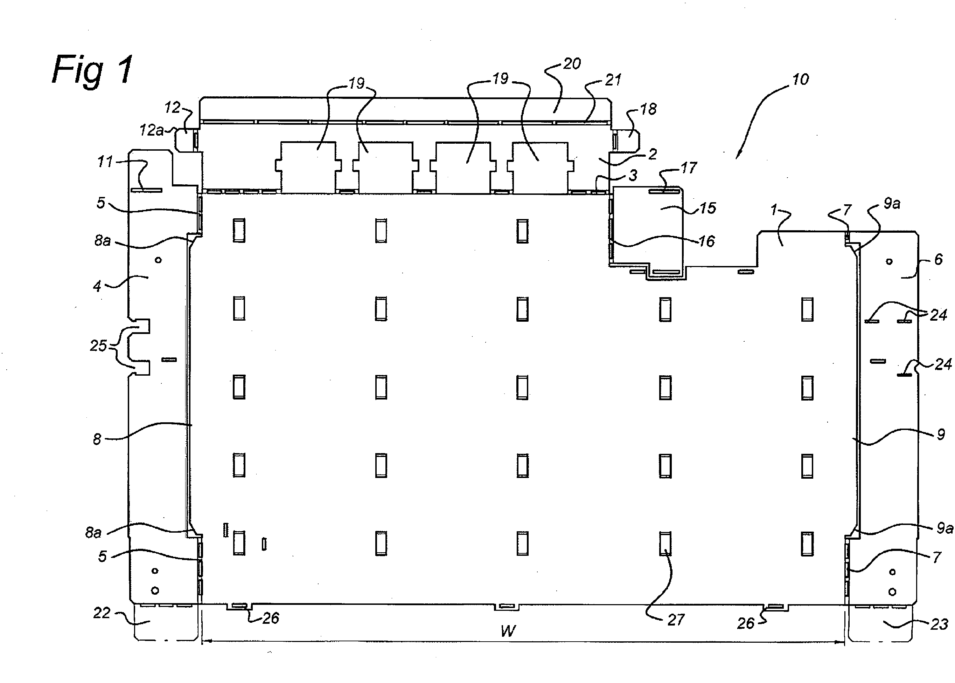

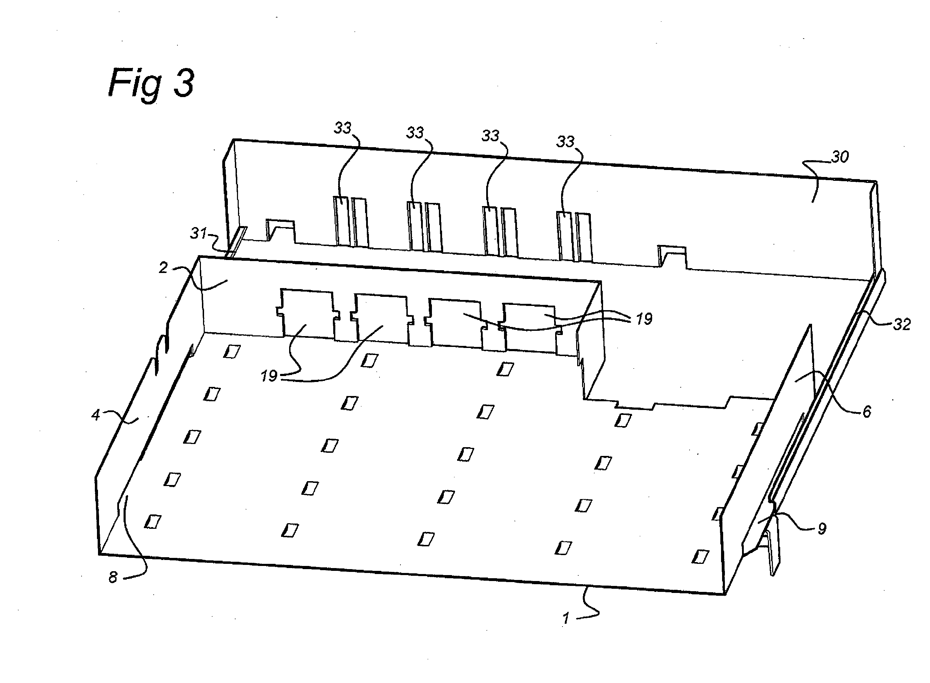

In Fig. 1, a top view of a blank 10 for forming a drawer according to an embodiment of the present invention is shown schematically. The blank 10 is manufactured from a flat steel plate for forming a drawer 10 to be used in an electrical cabinet. The drawer 10 has a predetermined width w matching a holder 30 in the electrical cabinet (see description of Fig. 3 below). The blank comprises a base plate part 1, which may be provided with indentations 27 for handling, assembly, ventilation or other purposes. Furthermore, a first foldable part 2 is provided for forming a connector wall with an associated folding line 3 extending in a first direction (along the width of the drawer 10 in Fig. 1), as well as second and third foldable parts 4, 6 for forming side walls of the drawer 10 with associated folding lines 5, 7 extending in a second direction perpendicular to the first direction.

The base plate part 1 comprises left and right or lateral slider parts 8, 9 (matching associated guiding rails 31, 32 of the holder 30), extending outward of the associated folding lines 5, 7 of the second and third foldable parts 4, 6. The lateral slider parts 8, 9 extend on two sides of the base plate part 1 after folding the second and third foldable parts 4, 6 substantially perpendicular to the base plate part 1 (see also Fig. 3 to be discussed below).

As shown in the top view of Fig. 1, the lateral slider part 8, 9 comprise beveled edges 8a, resp. 9a. As shown the beveled edges 8a, 9a are at an angle (e.g. 45°) to the lengthwise direction of the lateral slider part 8, 9 (i.e. the second direction). In further embodiments, the edges 8a, 9a are rounded off with a rounding radius. In both variants, this makes shifting the drawer 10 into or out of the cabinet holder 30 easier.

In the embodiment shown in Fig. 1, the second foldable part 4 has a dimension in the second direction which is longer than a dimension in the second direction of the third foldable part 6. As a result, an aperture is provided in the back part of the drawer, allowing e.g. cabling or connectors to run to other space in the electrical cabinet.

As shown in the embodiment of Fig. 1, the left slider part 8 is longer in the second direction as compared to the right slider part 9. This is to be able to further accommodate the usually present control and test interfacing in the right back corner of the drawer 10. This suffices in co-operation with the guiding rails 31, 32 of the holder 30 to firmly hold the drawer 10 in the holder 30 in the surface formed by the first and second direction (i.e. the flat surface of the base plate part 1), allowing virtually no movement other than the sliding movement of the drawer 10.

In a further embodiment, the blank 10 is extended on the right part, allowing the right slider part 9 to have substantially similar dimensions as the left slider part 8. In exemplary embodiments the longest dimension of the lateral slider parts 8, 9 is e.g. more than 50%, or even more than 75% of the depth of the drawer 10.

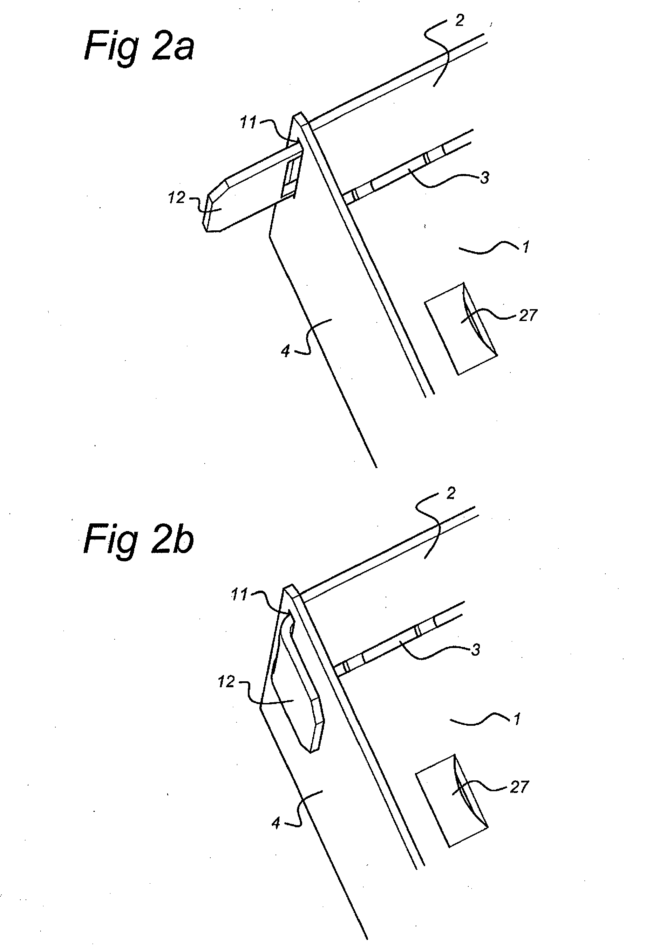

At the left back side of the blank 10 as shown in Fig. 1, and in more detail in the enlarged perspective vies of Fig. 2a and 2b, the features are shown which allow the drawer 10 to be formed and fixed by hand. The blank 10 comprises a slot 11, 17 and a foldable lip 12, 18, each attached to different parts 2, 4, 15 of the blank, the position of the slot 11 matching the position of the foldable lip 12 when the different parts 2, 4, 15 have been folded at an angle (e.g. perpendicular) to the base plate 1. E.g., the second foldable part 4 is provided with a slot 11, and the first foldable part 2 is provided with a foldable lip 12 (e.g. using a folding line similar to the folding lines 3, 5, 6 already discussed above). Again, the foldable lip 12 may be provided with beveled or rounded edges 12a the further ease assembly operations. As shown in Fig. 2b, the foldable lip 12 may be easily folded along the second foldable part 4, e.g. using a thumb, and then a very good structural fixation of the back wall (first foldable part 2) and left side wall (second foldable part 4) is obtained.

In the embodiment shown in Fig. 1, the blank 1 is further provided with a fourth foldable part 15 with an associated folding line 16 extending in the second direction and forming a junction with the associated folding line 3 of the first foldable part 2. Again, this (optional) fourth foldable part 15 can be folded by hand, as well as the foldable lip 18, and provides additional structural strength for the back wall of the drawer 10 formed by the first foldable part 2.

As shown in the embodiment shown in Fig. 1, the first foldable part 2 is provided with a plurality of apertures 19 (four shown in this embodiment) which are arranged to receive connector arrangements. These connector arrangements can interface with connectors positioned in corresponding apertures 33 in the holder 30 of the electrical cabinet, e.g. one for each of three phases and ground.

In Fig. 3 a perspective view is shown of a drawer 10 according to embodiment of the present invention, which is partly installed in a cabinet holder 30. The cabinet holder 30 is installed in an electrical cabinet, usually a plurality of cabinet holders 30 with the same or differing height in between are present to allow installation of drawers 10 of the same or different height. The drawer holder 30 is provided with guiding rails 31, 32, which are arranged to accommodate the lateral slider part 8, 9 of the drawer 10. A back wall of the cabinet holder 30 is provided with apertures 33, which allow access to bus bars or connectors in the electrical cabinet. The apertures 33 are aligned with the apertures 19 in the back wall (first foldable part 2) of the drawer 10. In the embodiment shown, four apertures 33 are present, to allow connection to three phases and ground.

To provide even further strength to the back wall of the drawer 10, the blank for forming the drawer 10 is further provided with a fifth foldable part 20 attached to the first foldable part 2 with an associated folding line 21 extending in the first direction. The fifth foldable part 20 is sufficiently narrow to leave the plurality of apertures 19 free when folded over 180°, yet wide enough to provide additional structural strength.

A drawer 10 for an electrical cabinet is usually provided with a front panel, which is e.g. mounted to the side walls 4, 6 of the drawer 10 using screws. The front panel may rest in or be connected to a number of (optional) slots 26 extending from the front side of the drawer 10. In a further embodiment the second and third foldable parts 4, 6 are additionally provided with a sixth and a seventh foldable part 22, 23 having associated folding lines extending in the first direction, which when folded at an angle (e.g. perpendicular) to the second and third foldable parts 4, 6 form mounting elements for mounting a drawer front panel. E.g. the drawer front panel may be clicked or clamped onto to sixth and seventh foldable parts 22, 23, without the use of screws or the like..

The blank 10 according to the present invention embodiments may be formed from sheets of metal material (e.g. sheet steel) which allows bending by hand of the relevant parts. E.g. sheet metal is used having a thickness of between 1 and 2 mm, e.g. 1.5 mm. The folding lines (folding lines 3, 5, 7, 16 shown in Fig. 1) may be formed by a punching operation on a sheet to form the blank 10. Each folding line may then be formed by a number of (elongate) holes with blank material left in between. Punching sheet metal is a very cost-effective manufacturing method. As will be clear to the skilled person, alternative manufacturing methods exist, such as creasing lines into the sheet metal, taking away material to obtain thinner parts forming the folding lines, or numerous cutting techniques, such as laser or water cutting.

As indicated in the embodiment shown in Fig. 1, the blank 10 may in an even further embodiment be provided with a plurality of slots 24, 25 for installing a component rail after forming the drawer 10. As shown, the right wall of the drawer 10 comprises slots 24, allowing a component rail to be inserted, and the left wall of the drawer 10 comprises opening 25 allowing the component rail to be clamped for fixing it in the drawer 10.

## Claims

1. Blank for forming a drawer (10) for an electrical cabinet,
the blank comprising a base plate part (1), a first foldable part (2) for a connector wall with an associated folding line (3) extending in a first direction, and
second and third foldable parts (4, 6) for side walls with associated folding lines (5, 7) extending in a second direction perpendicular to the first direction,
wherein the base plate part (1) comprises lateral slider parts (8, 9) extending outward of the associated folding lines (5, 7) of the second and third foldable parts (4, 6).

2. Blank according to claim 1, wherein the lateral slider part (8, 9) comprises beveled edges (8a, 9a).

3. Blank according to claim 1 or 2, wherein the second foldable part (4) has a dimension in the second direction which is larger than a dimension in the second direction of the third foldable part (6).

4. Blank according to claim 1 or 2, wherein the lateral slider parts (8, 9) have substantially similar dimensions.

5. Blank according to any one of claims 1-4, wherein the blank comprises a slot (11, 17) and a foldable lip (12, 18), each attached to different parts (2, 4, 15) of the blank, the position of the slot (11) matching the position of the foldable lip (12) when the different parts (2, 4, 15) of the blank have been folded at an angle to the base plate part (1).

6. Blank according to claim 5, wherein the foldable lip (12, 18) has beveled edges (12a).

7. Blank according to any one of claims 1-6, wherein the blank comprises a fourth foldable part (15) with an associated folding line (16) extending in the second direction and forming a junction with the associated folding line (3) of the first foldable part (2).

8. Blank according to any one of claims 1-7, wherein the first foldable part (2) is provided with a plurality of openings (19) which are arranged to receive connector arrangements.

9. Blank according to any one of claims 1-8, wherein the blank further comprises a fifth foldable part (20) attached to the first foldable part (2) with an associated folding line (21) extending in the first direction.

10. Blank according to any one of claims 1-9, wherein the second and third foldable parts (4, 6) are provided with a sixth and a seventh foldable part (22, 23) having associated folding lines extending in the first direction, which when folded substantially perpendicular to the second and third foldable parts (4, 6) form mounting elements for mounting a drawer front panel.

11. Blank according to any one of claims 1-10, wherein the folding lines (3, 5, 7, 16) are formed by punching the blank.

12. Blank according to any one of claims 1-11, wherein the blank comprises sheet metal which allows bending by hand.

13. Blank according to any one of claims 1-12, wherein the second and third foldable parts (4, 6) are provided with slots (24, 25) for installing a component rail after forming the drawer (10).

## Patentansprüche

1. Zuschnitt zum Bilden einer Schublade (10) für einen Elektroschaltschrank,
wobei der Zuschnitt einen Basisblechteil (1), einen ersten faltbaren Teil (2) für eine Verbindungswand mit einer zugehörigen Faltlinie (3), die sich in eine erste Richtung erstreckt, und zweite und dritte faltbare Teile (4, 6) für Seitenwände mit zugehörigen Faltlinien (5, 7), die sich in eine zweite Richtung senkrecht zu der ersten Richtung erstrecken, aufweist,
wobei der Basisblechteil (1) seitliche Schieberteile (8, 9) aufweist, die sich äußerlich von den zugehörigen Faltlinien (5, 7) von den zweiten und dritten faltbaren Teilen (4, 6) erstrecken.

2. Zuschnitt gemäß Anspruch 1, wobei der seitliche Schieberteil (8, 9) abgeschrägte Ecken (8a, 9a) aufweist.

3. Zuschnitt gemäß Anspruch 1 oder 2, wobei der zweite faltbare Teil (4) eine Abmessung in der zweiten Richtung hat, die größer als eine Abmessung des dritten faltbaren Teils (6) in der zweiten Richtung ist.

4. Zuschnitt gemäß Anspruch 1 oder 2, wobei die seitlichen Schieberteile (8, 9) im Wesentlichen ähnliche Abmessungen haben.

5. Zuschnitt gemäß irgendeinem der Ansprüche 1 - 4, wobei der Zuschnitt einen Schlitz (11, 17) und eine faltbare Lippe (12, 18) aufweist, jeweils angebracht an unterschiedlichen Teilen (2, 4, 15) von dem Zuschnitt, wobei die Position von dem Schlitz (11) der Position von der faltbaren Lippe (12) entspricht, wenn die unterschiedlichen Teile (2, 4, 15) von dem Zuschnitt in einem Winkel zum Basisblechteil (1) gefaltet wurden.

6. Zuschnitt gemäß Anspruch 5, wobei die faltbare Lippe (12, 18) abgeschrägte Ecken (12a) hat.

7. Zuschnitt gemäß irgendeinem der Ansprüche 1 - 6, wobei der Zuschnitt einen vierten faltbaren Teil (15) mit einer zugehörigen Faltlinie (16) aufweist, die sich in die zweite Richtung erstreckt und eine Verbindung mit der zugehörigen Faltlinie (3) von dem ersten faltbaren Teil (2) bildet.

8. Zuschnitt gemäß irgendeinem der Ansprüche 1 - 7, wobei der erste faltbare Teil (2) mit einer Vielzahl von Öffnungen (19) ausgestattet ist, die angeordnet sind, um Verbindungsanordnungen zu empfangen.

9. Zuschnitt gemäß irgendeinem der Ansprüche 1 - 8, wobei der Zuschnitt weiter einen fünften faltbaren Teil (20) aufweist, der an dem ersten faltbaren Teil (2) angebracht ist, mit einer zugehörigen Faltlinie (21), die sich in die erste Richtung erstreckt.

10. Zuschnitt gemäß irgendeinem der Ansprüche 1 - 9, wobei die zweiten und dritten faltbaren Teile (4, 6) mit einem sechsten und einem siebten faltbaren Teil (22, 23) ausgestattet sind, mit zugehörigen Faltlinien, die sich in die erste Richtung erstrecken, die, falls im Wesentlichen senkrecht zu den zweiten und dritten faltbaren Teilen (4, 6) gefaltet, Befestigungselemente zur Befestigung einer Schubladenfrontblende bilden.

11. Zuschnitt gemäß irgendeinem der Ansprüche 1 - 10, wobei die Faltlinien (3, 5, 7, 16) durch Stanzen des Zuschnitts gebildet sind.

12. Zuschnitt gemäß irgendeinem der Ansprühe 1 - 11, wobei der Zuschnitt ein Metallblech umfasst, das ein Biegen von Hand ermöglicht.

13. Zuschnitt gemäß irgendeinem der Ansprüche 1 - 12, wobei die zweiten und dritten faltbaren Teile (4, 6) mit Schlitzen (24, 25) zur Montage einer Komponentenschiene nach Bilden der Schublade (10) ausgestattet sind.

## Revendications

1. Ebauche pour la formation d'un tiroir (10) pour une armoire électrique,
l'ébauche comprenant une partie formant plaque de base (1), une première partie pliable (2) pour une paroi de connecteur avec une ligne de pliage associée (3) qui s'étend dans une première direction, et
une deuxième et une troisième partie pliable (4, 6) pour des parois latérales avec des lignes de pliage associées (5, 7) qui s'étendent dans une seconde direction perpendiculaire à la première direction,
dans laquelle la partie formant plaque de base (1) comprend des parties coulissantes latérales (8, 9) s'étendant en dehors des lignes de pliage associées (5, 7) des deuxième et troisième parties pliables (4, 6).

2. Ebauche selon la revendication 1, dans laquelle la partie coulissante latérale (8, 9) comprend des bords biseautés (8a, 9a).

3. Ebauche selon la revendication 1 ou la revendication 2, dans laquelle la deuxième partie pliable (4) a une dimension dans la seconde direction qui est plus grande que la dimension dans la seconde direction de la troisième partie pliable (6).

4. Ebauche selon la revendication 1 ou la revendication 2, dans laquelle les parties coulissantes latérales (8, 9) ont des dimensions sensiblement similaires.

5. Ebauche selon l'une quelconque des revendications 1 à 4, dans laquelle l'ébauche comprend une fente (11, 17) et une lèvre pliable (12, 18), chacune fixée à différentes parties (2, 4, 15) de l'ébauche, la position de la fente (11) correspondant à la position de la lèvre pliable (12) lorsque les différentes parties (2, 4, 15) de l'ébauche ont été repliées sous un certain angle avec la partie formant plaque de base (1).

6. Ebauche selon la revendication 5, dans laquelle la lèvre pliable (12, 18) présente des bords biseautés (12a).

7. Ebauche selon l'une quelconque des revendications 1 à 6, dans laquelle l'ébauche comprend une quatrième partie pliable (15) avec une ligne de pliage associée (16) qui s'étend dans la seconde direction et qui forme une jonction avec la ligne de pliage associée (3) de la première partie pliable (2).

8. Ebauche selon l'une quelconque des revendications 1 à 17, dans laquelle la première partie pliable (2) est pourvue d'une pluralité d'ouvertures (19) qui sont aménagées pour recevoir des aménagements de connecteurs.

9. Ebauche selon l'une quelconque des revendications 1 à 8, dans laquelle l'ébauche comprend en outre une cinquième partie pliable (20) fixée à la première partie pliable (2) avec une ligne de pliage associée (21) qui s'étend dans la première direction.

10. Ebauche selon l'une quelconque des revendications 1 à 9, dans laquelle la deuxième et la troisième partie pliable (4, 6) sont pourvues d'une sixième et d'une septième partie pliable (22, 23) ayant des lignes de pliage associées qui s'étendent dans la première direction et qui, lorsqu'elles sont repliées de manière sensiblement perpendiculaire à la deuxième et à la troisième partie pliable (4, 6), forment des éléments de montage pour monter un panneau avant de tiroir.

11. Ebauche selon l'une quelconque des revendications 1 à 10, dans laquelle les lignes de pliage (3, 5, 7, 16) sont formées par poinçonnage de l'ébauche.

12. Ebauche selon l'une quelconque des revendications 1 à 11, dans laquelle l'ébauche comprend du métal en feuille qui permet un pliage à la main.

13. Ebauche selon l'une quelconque des revendications 1 à 12, dans laquelle la deuxième et la troisième partie pliable (4, 6) sont pourvues de fentes (24, 25) pour installer un rail de composant après formation du tiroir (10).
